# EUROPEAN PATENT APPLICATION

(11) **EP 4 764 910 A1**
(43) Date of publication of application: **24.06.2026**
(21) Application number: 23949160.8
(22) Date of filing: 15.08.2023
(51) Int. Cl.: G06F 21/31, G06F 21/32, G06F 21/45

(54) **INFORMATION PROCESSING SYSTEM, INFORMATION PROCESSING METHOD, AND RECORDING MEDIUM**

(71) Applicant: NEC Corporation, Minato-ku Tokyo 108-8001 (JP)
(72) Inventor: SASAKI, Masato, Tokyo 108-8001 (JP); OAMI, Ryoma, Tokyo 108-8001 (JP); OGINO, Yuka, Tokyo 108-8001 (JP); YAMAKABE, Ryo, Tokyo 108-8001 (JP); SHIINA, Misao, Tokyo 108-8001 (JP); OSAKA, Masahiko, Tokyo 108-8001 (JP); KIMURA, Megumi, Tokyo 108-8001 (JP)
(74) Representative: Betten & Resch
(86) International application number: PCT/JP2023/029531
(87) International publication number: WO 2025/037390

(57) **Abstract**

An information processing system includes: an acquisition unit that acquires a target image including a target; an authentication unit that performs authentication processing on the target, based on the target image; and a display unit that displays code information indicating information about the target image, in a range where the target can confirm the code information, in response to a success in the authentication processing. According to such an information processing system, it is possible to appropriately output the information about the target image from an acquisition source to another apparatus or the like.

## Description

### Technical Field

The present disclosure relates to technical fields of an information processing system, an information processing method, and a recording medium.

### Background Art

In a system performing biometric authentication, it is known to transmit information about a living body obtained from images or the like, to other apparatuses. For example, Patent Literature 1 discloses transmitting biometric authentication data to wristwatches, headsets, mobile phones, smartphones, portable personal computers, or the like.

### Citation List

### Patent Literature

[Patent Literature 1] JP2018-136886A

### Summary

### Technical Problem

It is an example object of the present disclosure to provide an information processing system, an information processing method, and a recording medium that are allowed to appropriately output information about biometric authentication from its acquisition source.

### Solution to Problem

An information processing system according to an example aspect of the present disclosure includes: an acquisition unit that acquires a target image including a target; an authentication unit that performs authentication processing on the target, based on the target image; and a display unit that displays code information indicating information about the target image, in a range where the target can confirm the code information, in response to a success in the authentication processing.

An information processing method according to an example aspect of the present disclosure is an information processing method that is executed by at least one computer, the information processing method including: acquiring a target image including a target; performing authentication processing on the target, based on the target image; and displaying code information indicating information about the target image, in a range where the target can confirm the code information, in response to a success in the authentication processing.

A recording medium according to an example aspect of the present disclosure is a recording medium on which a computer program that allows at least one computer to execute an information processing method is recorded, the information processing method including: acquiring a target image including a target; performing authentication processing on the target, based on the target image; and displaying code information indicating information about the target image, in a range where the target can confirm the code information, in response to a success in the authentication processing.

### Brief Description of Drawings

[FIG. 1] FIG. 1 is a block diagram illustrating a hardware configuration of a first information processing system.
[FIG. 2] FIG. 2 is a block diagram illustrating a functional configuration of the first information processing system.
[FIG. 3] FIG. 3 is a flowchart illustrating a flow of operation of the first information processing system.
[FIG. 4] FIG. 4 is a block diagram illustrating a functional configuration of a second information processing system.
[FIG. 5] FIG. 5 is a plan view illustrating a configuration of a smartphone serving as an example of a portable terminal in the second information processing system.
[FIG. 6] FIG. 6 is a flowchart illustrating a flow of a registration operation in the second information processing system.
[FIG. 7] FIG. 7 is a flowchart illustrating a flow of an authentication operation in the second information processing system.
[FIG. 8] FIG. 8 is a block diagram illustrating a functional configuration of a third information processing system.
[FIG. 9] FIG. 9 is a flowchart illustrating a flow of registration operation of the third information processing system.
[FIG. 10] FIG. 10 is a flowchart illustrating a flow of an authentication operation in the third information processing system.
[FIG. 11] FIG. 11 is a block diagram illustrating a functional configuration of a fourth information processing system.
[FIG. 12] FIG. 12 is a flowchart illustrating a flow of an update operation in the fourth information processing system.
[FIG. 13] FIG. 13 is a side view illustrating a configuration of a gate apparatus in the fifth information processing system.
[FIG. 14] FIG. 14 is a flowchart illustrating a flow of a first display operation in the fifth information processing system.
[FIG. 15] FIG. 15 is a flowchart illustrating a flow of a second display operation in the fifth information processing system.
[FIG. 16] FIG. 16 is a side view illustrating a modified example of the gate apparatus in the fifth information processing system.

### Description of Example Embodiments

Hereinafter, an information processing system, an information processing method, and a recording medium according to example embodiments will be described with reference to the drawings.

### <First Example Embodiment>

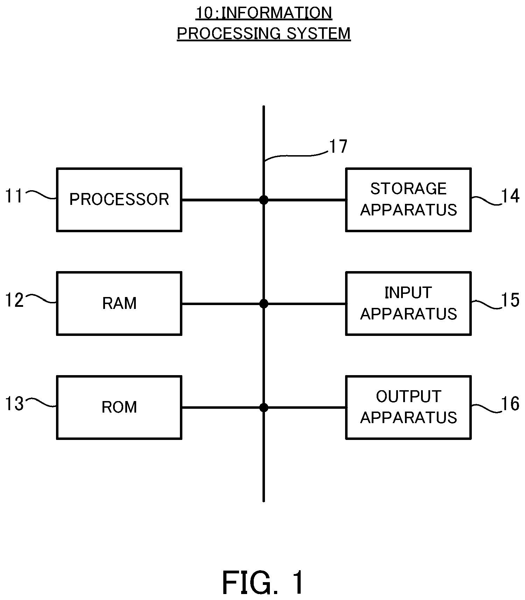

A first information processing system will be described with reference to FIG. 1 to FIG. 3.

### (Hardware Configuration)

First, a hardware configuration of a first information processing system will be described with reference to FIG. 1. FIG. 1 is a block diagram illustrating the hardware configuration of the first information processing system.

As illustrated in FIG. 1, a first information processing system 10 includes a processor 11, a RAM (Random Access Memory) 12, a ROM (Read-Only Memory) 13, and a storage apparatus 14. The information processing system 10 may further include an input apparatus 15 and an output apparatus 16. The processor 11, the RAM 12, the ROM 13, the storage apparatus 14, the input apparatus 15, and the output apparatus 16 are connected via a data bus 17. The data bus 17 may be an interface other than a data bus (e.g., LAN, USB, etc.).

The processor 11 reads a computer program. For example, the processor 11 is configured to read a computer program stored in at least one of the RAM 12, the ROM 13, and the storage apparatus 14. Alternatively, the processor 11 may read a computer program stored on a computer-readable recording medium, by using a not-illustrated recording medium reading apparatus. The processor 11 may also acquire (i.e., read) a computer program from a not-illustrated apparatus disposed outside the information processing system 10 via a network interface. The processor 11 controls the RAM 12, the storage apparatus 14, the input apparatus 15, and the output apparatus 16 by executing the read computer program. Especially in the present example embodiment, when the processor 11 executes the read computer program, a function block for displaying code information indicating information about a target image is realized in the processor 11. That is, the processor 11 may function as a controller that performs each control in the information processing system 10.

The processor 11 may be configured, for example, as a CPU (Central Processing Unit), a GPU (Graphics Processing Unit), a FPGA (field-programmable gate array), a DSP (Digital Signal Processor), an ASIC (Application Specific Integrated Circuit), or a quantum processor. The processor 11 may be configured by using one of them, or a plurality of them in parallel.

The RAM 12 temporarily stores the computer program to be executed by the processor 11. The RAM 12 temporarily stores data that are temporarily used by the processor 11 when the processor 11 is executing the computer program. The RAM 12 may be, for example, a D-RAM (Dynamic Random Access Memory) or a SRAM (Static Random Access Memory). In addition, another type of volatile memory may be used in place of the RAM 12.

The ROM 13 stores the computer program to be executed by the processor 11. The ROM 13 may also store other fixed data. The ROM 13 may be, for example, a P-ROM (Programmable Read Only Memory) or an EPROM (Erasable Read Only Memory). In addition, another type of nonvolatile memory may be used in place of the ROM 13.

The storage apparatus 14 stores data that are stored by the information processing system 10 for a long time. The storage apparatus 14 may operate as a transitory storage apparatus of the processor 11. The storage apparatus may store therein the computer program to be executed by the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the information processing system 10. The input apparatus 15 may include, for example, at least one of a keyboard, a mouse, and a touch panel. The input apparatus 15 may be configured as a part of a portable terminal such as a smartphone and a tablet. The input apparatus 15 may be an apparatus that allows audio input/voice input, including a microphone, for example. The input apparatus 15 may be used solely for maintenance purposes. In such a case, the input apparatus 15 may be omitted as appropriate from the components used when the information processing system 10 is operated.

The output apparatus 16 is an apparatus that outputs information about the information processing system 10 to the outside. For example, the output apparatus 16 may be a display apparatus (e.g., a display) that is configured to display the information about the information processing system 10. The output apparatus 16 may also be a speaker or the like that is configured to audio-output the information about the information processing system 10. The output apparatus 16 may also be configured as a portable terminal such as a smartphone and a tablet.

Although FIG. 1 illustrates an example of the information processing system 10 including a plurality of apparatuses, it may also be configured as a single apparatus (i.e., an information processing apparatus) having all or a part of these functions. Such an information processing apparatus may include, for example, only the processor 11, the RAM 12, and the ROM 13 described above. The other components (i.e., the storage apparatus 14, the input apparatus 15, the output apparatus 16, etc.) may be provided in an external apparatus connected to the apparatus. In addition, the information processing apparatus may realize a part of an arithmetic/computational function by using an external apparatus (e.g., an external server or cloud, etc.).

### (Functional Configuration)

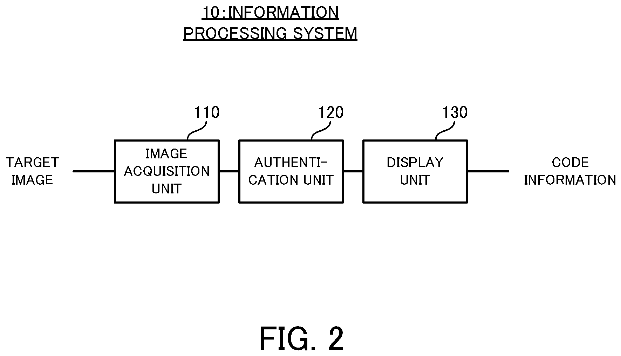

Next, with reference to FIG. 2, a functional configuration of the first information processing system 10 will be described. FIG. 2 is a block diagram illustrating the functional configuration of the first information processing system.

In FIG. 2, the first information processing system 10 includes, as components for realizing its functions, an image acquisition unit 110, an authentication unit 120, and a display unit 130. Each of the image acquisition unit 110, the authentication unit 120, and the display unit 130 may be, for example, a processing block in the aforementioned processor 11 (see FIG. 1). Furthermore, the display unit 130 may include a display for actual display. This display may be included, for example, in the output apparatus 16 described above (see FIG. 1).

The image acquisition unit 110 is configured to acquire a target image including a target. The target here may include not only humans, but also animals such as dogs and cats. The target image may be an image including the entire target, or an image including a part of the target. For example, the target image may be an eye image including the target's eye, or a face image including the target's face. Alternatively, the target image may be a fingerprint image including the target's fingerprint, a vein image including the target's veins, or an image including each biological part of the target. The image acquisition unit 110 may be configured to acquire the target image directly from a camera that captures the target image. Alternatively, the image acquisition unit 110 may be configured to acquire the target image from a storage apparatus or a similar device that stores therein the target image captured by the camera. The target image acquired by the image acquisition unit 110 is configured to be outputted to the authentication unit 120.

The authentication unit 120 is configured to perform authentication processing on the target, based on the target image acquired by the image acquisition unit 110. The authentication unit 120 may perform the authentication processing on various terminal apparatuses (i.e., on the edge side). Alternatively, the authentication unit 120 may perform the authentication processing in the cloud that collects data from various terminal apparatuses. The authentication processing may be biometric authentication using biometric information on the target included in the target image. For example, the authentication unit 120 may perform iris authentication/recognition using the eye image of the target, or perform face authentication/recognition using the face image of the target. Alternatively, the authentication unit 120 may perform fingerprint authentication using the fingerprint image of the target, vein authentication using the vein image of the target, or biometric authentication using an image including another biological part of the target. The authentication unit 120 may perform the authentication processing by matching the target image acquired by the image acquisition unit 110 to a registration image registered in advance. In this case, the authentication unit 120 may use a registration image stored in the authentication unit 120 itself, or may read and use an externally stored registration image. The authentication unit 120 may have a function of extracting feature quantities from the target image. In this case, the authentication unit 120 may perform the authentication processing on the target, using the feature quantities extracted from the target image. A result of the authentication processing in the authentication unit 120 is configured to be outputted to the display unit 130.

The display unit 130 is configured to display code information indicating information about the target image, in a case where the authentication processing by the authentication unit 120 is successful. The information about the target image may be the target image itself, or information that is obtainable from the target image. The information about the target image may be information usable for the authentication processing to be performed on the target. For example, the information about the target image may be biological feature quantities of the target (e.g., iris feature quantities, facial feature quantities, etc.) extracted from the target image. The code information may be obtained by encoding information itself about the target, or may be obtained by encoding information for accessing the information about the target image. The type of the code information is not particularly limited, but the display unit 130 may be configured, for example, to display a two-dimensional code. The display unit 130 may also have a function of generating the code information from the information about the target. Alternatively, the display unit 130 may be configured to transmit the information about the target to an external apparatus, and may display code information generated by the external apparatus.

The display unit 130 is configured to display the code information in a range where the target can confirm it. The where the target can confirm it may not be limited to a range where the target can visually recognize it, but may also be a range where the code information is readable even if the target cannot visually recognize it. For example, the display unit 130 may display the code information at a position where the target can read it using a reading apparatus (e.g., a smartphone equipped with a camera, etc.). More specifically, the display unit 130 may be configured to display the code information within reach, even if the target cannot directly see it. Furthermore, the display unit 130 may display not only the code information, but also an indication prompting the target to read the code information. For example, the display unit 130 may display a message such as "Please read the displayed code information." Such a message may, for example, be audio-outputted to the target.

### (Flow of Operation)

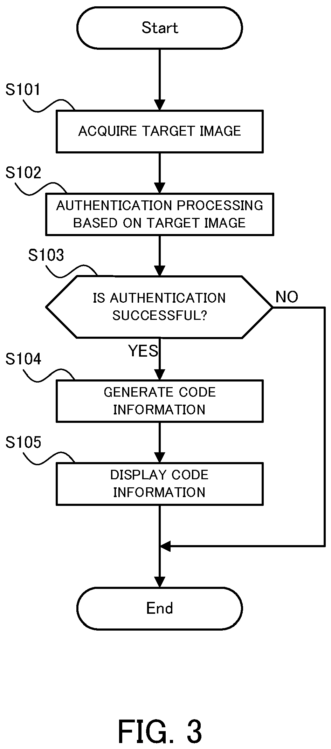

Next, with reference to FIG. 3, a flow of operation of the first information processing system 10 will be described. FIG. 3 is a flowchart illustrating the flow of operation of the first information processing system.

As illustrated in FIG. 3, when the operation of the first information processing system 10 is started, the image acquisition unit 110 first acquires the target image (Step S101). The image acquisition unit 110 outputs the acquired target image to the authentication unit 120.

Subsequently, the authentication unit 120 performs the authentication processing on the target, based on the image acquired by the image acquisition unit 110 (Step S102). In a case where the authentication processing performed on the target is not successful (Step S103: NO), the subsequent processing may be omitted.

On the other hand, in a case where the authentication processing performed on the target is successful (Step S103: YES), the display unit 130 generates the code information indicating the information about the target image (Step S104). Then, the display unit 130 displays the code information in the range where the target can confirm it (Step S105).

After the display unit 130 displays the code information, for example, the target performs an action of reading the code information. The action of reading the code information will be described in detail in another example embodiment later.

### (Technical Effect)

Next, a technical effect obtained by the first information processing system 10 will be described.

As described in FIG. 1 to FIG. 3, in the first information processing system 10, in a case where the authentication processing using the target image is successful, the code information indicating the information about the target image is displayed. This allows appropriate output of the information about the target image using the code information. For example, by the target reading the code information using a terminal that is configured to read the code information, the information about the target image may be outputted to a terminal owned by the target. Therefore, it is possible to store information about a high-quality target image acquired by a dedicated device on the terminal owned by the target, or to perform various types of processing (e.g., biometric authentication, etc.) using the information about the high-quality target image.

### < Second Example Embodiment>

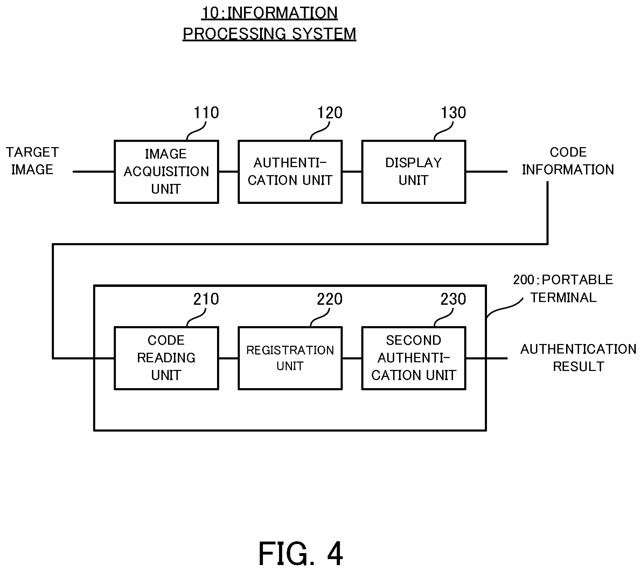

A second information processing system 10 will be described with reference to FIG. 4 to FIG.7. The second information processing system 10 partially differs from the first information processing system 10 described above only in its configuration and operation, and may be the same as the first information processing system 10 in the other parts. Therefore, a part differing from the first example embodiment will be described in detail below, and a description of the other overlapping parts will be omitted as appropriate.

### (Functional Configuration)

First, with reference to FIG. 4, a functional configuration of the second information processing system 10 will be described. FIG. 4 is a block diagram illustrating the functional configuration of the second information processing system. In FIG. 4, the same components as those illustrated in FIG. 2 carry the same reference numerals.

As illustrated in FIG. 4, the second information processing system 10 includes, as components for realizing its functions, the image acquisition unit 110, the authentication unit 120, the display unit 130, and a portable terminal 200. That is, the second information processing system 10 further includes the portable terminal 200 in addition to the configuration of the first information processing system 10 (see FIG. 2).

The portable terminal 200 is a terminal owned by the target. The portable terminal 200 may be, for example, a smartphone, a tablet, or a similar device owned by the target. The portable terminal 200 includes, as components for realizing its functions, a code reading unit 210, a registration unit 220, and a second authentication unit 230.

The code reading unit 210 is configured to read the code information displayed by the display unit 130. The code reading unit 210 reads the code information, for example, using a camera, a scanner, a similar device provided in the portable terminal 200. The target can read the code information, for example, by holding the portable terminal 200 over a display on which the code information is displayed. Furthermore, the code reading unit 210 is configured to acquire the information about the target image, based on the read code information. The information about the target image acquired by the code reading unit 210 is configured to be outputted to the registration unit 220.

The registration unit 220 is configured to register the information about the target image acquired from the code information. For example, the registration unit 220 stores the information about the target image in a storage unit or the like provided in the portable terminal 200. The information about the target image registered by the registration unit 220 (hereinafter referred to as a "registration image" as appropriate) is used as a registration image to which the target image is to be matched in the authentication processing.

The second authentication unit 230 is configured to perform authentication processing on the target, using the registration image registered by the registration unit 220. The authentication processing performed by the second authentication unit 230 may be the same as the authentication processing performed by the authentication unit 120, or may be different processing. For example, the iris authentication may be performed by both the authentication unit 120 and the second authentication unit 230, or the face authentication may be performed by the authentication unit 120 and the iris authentication may be performed by the second authentication unit 230. After the registration image is registered, the second authentication unit 230 performs the authentication processing on the target, using a newly acquired target image. For example, the second authentication unit 230 performs one-to-one authentication processing by matching the newly acquired target image to the registration image registered by the registration unit 220. The target image used by the second authentication unit 230 may be an image acquired by the portable terminal 200. For example, the second authentication unit 230 may perform the authentication processing on the target, using a target image captured by a camera provided in the portable terminal 200.

### (Specific Example of Portable Terminal)

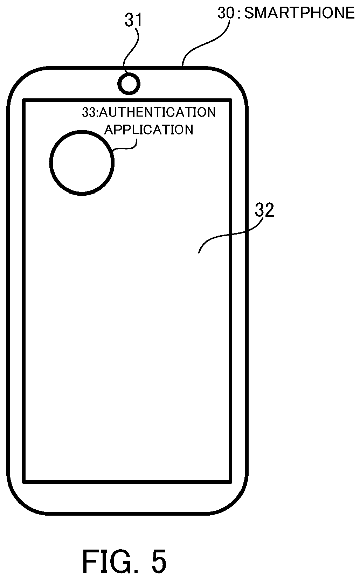

Next, with reference to FIG. 5, a specific example of the portable terminal 200 described above will be described. FIG. 5 is a plan view illustrating a configuration of a smartphone serving as an example of the portable terminal in the second information processing system.

As illustrated in FIG. 5, the portable terminal 200 in the second information processing system 10 may be a smartphone 30. The smartphone 30 is equipped with a camera 31. The code reading unit 210 may read the code information using the camera 31. The smartphone 30 is also equipped with a display 32. The display 32 may be configured to display, for example, the target image indicated by the code information read by the image reading unit 210 (in other words, the registration image registered by the registration unit 220). Alternatively, the display 32 may be configured to display the target image acquired by the second authentication unit 230 (i.e., the target image acquired in the authentication processing). Alternatively, the display 32 may be configured to display an authentication result of the second authentication unit 230. An authentication application 33 is an application installed on the smartphone. The authentication application 33 may have functions corresponding to the code reading unit 210, the registration unit 220, and the second authentication unit 230.

### (Registration Operation)

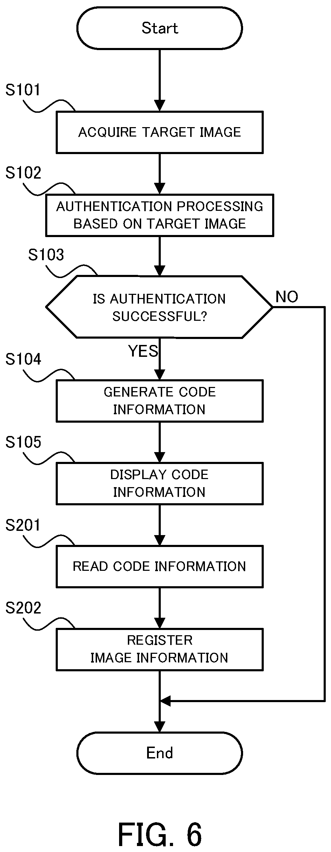

Next, with reference to FIG. 6, a flow of a registration operation in the second information processing system 10 (i.e., an operation when registering image information on the portable terminal 200) will be described. FIG. 6 is a flowchart illustrating the flow of the registration operation in the second information processing system. In FIG. 6, the same steps as those illustrated in FIG. 3 carry the same reference numerals.

As illustrated in FIG. 6, when the registration operation by the second information processing system 10 is started, the image acquisition unit 110 first acquires the target image (Step S101). The image acquisition unit 110 outputs the acquired target image to the authentication unit 120.

Subsequently, the authentication unit 120 performs the authentication processing on the target, based on the image acquired by the image acquisition unit 110 (Step S102). In a case where the authentication processing performed on the target is not successful (Step S103: NO), the subsequent processing may be omitted.

On the other hand, in a case where the authentication processing performed on the target is successful (Step S103: YES), the display unit 130 generates the code information indicating the information about the target image (Step S104). Then, the display unit 130 displays the code information in the range where the target can confirm it (Step S105).

Then, the code reading unit 210 in the portable terminal 200 reads the code information displayed by the display unit 130, and acquires the information about the target image (Step S201). Then, the registration unit 220 registers the information about the target image acquired by the code reading unit 210 (Step S202).

### (Authentication Operation)

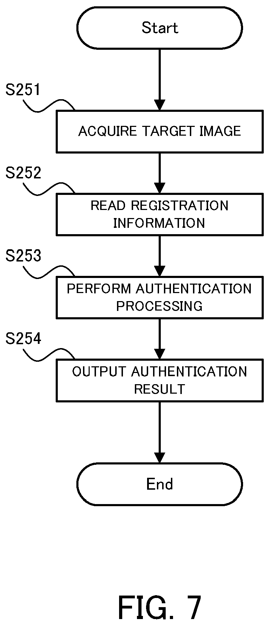

Next, with reference to FIG. 7, a flow of an authentication operation in the second information processing system 10 (i.e., an operation when performing the authentication processing on the portable terminal 200) will be described. FIG. 7 is a flowchart illustrating the flow of the authentication operation in the second information processing system.

As illustrated in FIG. 7, when the authentication operation by the second information processing system 10 is started, the second authentication unit 230 first acquires the target image (Step S251). After that, the second authentication unit 230 reads the registration image registered by the registration unit 220 (Step S252). That is, the second authentication unit 230 reads the registration image to which the target image is to be matched.

Then, the second authentication unit 230 matches the target image to the registration image and performs the authentication processing (step S253). Then, the second authentication unit 230 outputs the result of the authentication processing performed on the target (step S254).

The second authentication unit 230 may be configured to perform various types of processing, in a case where the authentication processing is successful. For example, the second authentication unit 230 may perform processing of unlocking the portable terminal 200, in a case where the authentication processing is successful.

### (Technical Effect)

Next, a technical effect obtained by the second information processing system 10 will be described.

As described in FIG. 4 to FIG. 7, in the second information processing system 10, information about the target image is registered in the portable terminal 200 and is used for the subsequent authentication processing. This allows the information about the target image acquired in advance, to be stored in the portable terminal 200 (in other words, an apparatus that is different from an acquisition source). In this case, it is possible to perform the authentication processing using the registration image, on the portable terminal 200.

### <Third Example Embodiment>

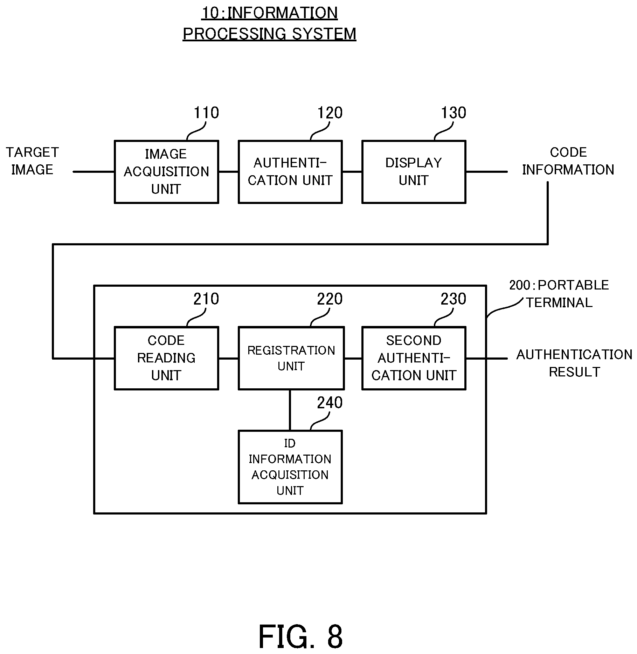

A third information processing system 10 will be described with reference to FIG. 8 to FIG. 10. The third information processing system 10 partially differs from the first and second information processing systems 10 described above only in its configuration and operation, and may be the same as the first and second information processing systems 10 in the other parts. Therefore, a part differing from each of the example embodiment described above will be described in detail below, and a description of the other overlapping parts will be omitted as appropriate.

### (Functional Configuration)

First, with reference to FIG. 8, a functional configuration of the third information processing system 10 will be described. FIG. 8 is a block diagram illustrating the functional configuration of the third information processing system. In FIG. 8, the same components as those illustrated in FIG. 4 carry the same reference numerals.

As illustrated in FIG. 8, the third information processing system 10 includes, as components for realizing its functions, the image acquisition unit 110, the authentication unit 120, the display unit 130, and the portable terminal 200. Especially, the portable terminal 200 in the third information processing system 10 is equipped with an identification (ID) information acquisition unit 240.

The ID information acquisition unit 240 is configured to acquire information about the target's ID (hereinafter referred to as "ID information" as appropriate). The ID information may include, for example, the target's name, date of birth, address, registered domicile, gender, nationality, and other information. The type of the ID here is not particularly limited, but may be, for example, a passport, My Number Card, driver's license, health insurance card, or the like. The ID information acquisition unit 240 may acquire the ID information, for example, from an image of an ID card. Alternatively, the ID information acquisition unit 240 may acquire the ID information from an IC chip or similar device embedded in the ID card. The ID information acquired by the ID information acquisition unit 240 is configured to be outputted to the registration unit 220. The registration unit 10 in the third information processing system 10 is configured to register the target's ID information in association with the information about the target image.

The ID information is read and used as appropriate in a case where the authentication processing in the second authentication unit 230 is successful. Specifically, in a case where the authentication processing is successful, the second authentication unit 230 performs predetermined processing using the ID information. The predetermined processing is, for example, processing requiring identity verification using an ID card. Specific examples of the predetermined processing include processing requiring high security, such as payment processing and cash advance processing.

### (Registration Operation)

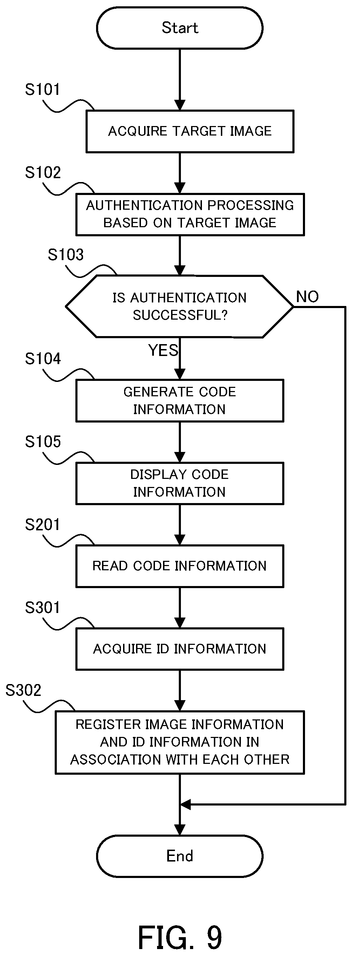

Next, with reference to FIG. 9, a flow of a registration operation in the third information processing system 10 will be described. FIG. 9 is a flowchart illustrating the flow of the registration operation in the third information processing system. In FIG. 9, the same steps as those illustrated in FIG. 6 carry the same reference numerals.

As illustrated in FIG. 9, when the registration operation by the third information processing system 10 is started, the image acquisition unit 110 first acquires the target image (Step S101). The image acquisition unit 110 outputs the acquired target image to the authentication unit 120.

Subsequently, the authentication unit 120 performs the authentication processing on the target, based on the image acquired by the image acquisition unit 110 (Step S102). In a case where the authentication processing performed on the target is not successful (Step S103: NO), the subsequent processing may be omitted.

On the other hand, in a case where the authentication processing performed on the target is successful (Step S103: YES), the display unit 130 generates the code information indicating the information about the target image (Step S104). Then, the display unit 130 displays the code information in the range where the target can confirm it (Step S105).

Then, the code reading unit 210 in the portable terminal 200 reads the code information displayed by the display unit 130, and acquires the information about the target image (Step S201). Furthermore, the ID information acquisition unit 240 acquires the target's ID information (Step S301). The ID information acquisition unit 240, however, may acquire the ID information in earlier timing. For example, the ID information acquisition unit 240 may acquire the ID information before acquiring the target image.

Then, the registration unit 220 registers the information about the target image acquired by the code reading unit 210 and the ID information acquired by the ID information acquisition unit 240, in association with each other (step S302). The registration unit 220 may register a piece of information about one target image, in association with a plurality of pieces of ID information (e.g., pieces of information about different types of IDs).

### (Authentication Operation)

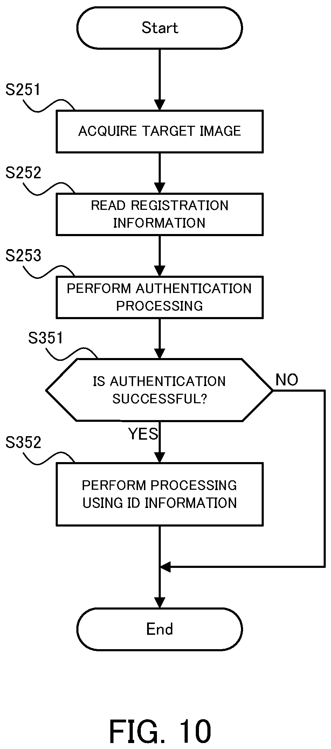

Next, with reference to FIG. 10, a flow of an authentication operation in the third information processing system 10 will be described. FIG. 10 is a flowchart illustrating the flow of the authentication operation in the third information processing system. In FIG. 10, the same steps as those illustrated in FIG. 7 carry the same reference numerals.

As illustrated in FIG. 10, when the authentication operation by the third information processing system 10 is started, the second authentication unit 230 first acquires the target image (Step S251). After that, the second authentication unit 230 reads the registration image registered by the registration unit 220 (Step S252). That is, the second authentication unit 230 reads the registration image to which the target image is to be matched.

Then, the second authentication unit 230 matches the target image to the registration image and performs the authentication processing (step S253). In a case where the authentication processing performed on the target is successful (Step S351: YES), the second authentication unit 230 reads the ID information and performs the predetermined processing using the ID information (Step S352). In a case where the authentication processing performed on the target is not successful (Step S351: NO), the predetermined processing is omitted.

### (Technical Effect)

Next, a technical effect obtained by the third information processing system 10 will be described.

As described in FIG. 8 to FIG. 10, in the third information processing system 10, the ID information is registered in association with the registration image. In a case where the authentication processing is successful, the processing using an ID card is performed. This allows the processing requiring an ID card to be appropriately performed without compromising security. For example, performing the authentication processing using the target image guarantees that the target is a genuine user corresponding to the ID card. Therefore, even when the target is not carrying their ID card, the processing requiring an ID card may be performed.

### <Fourth Example Embodiment>

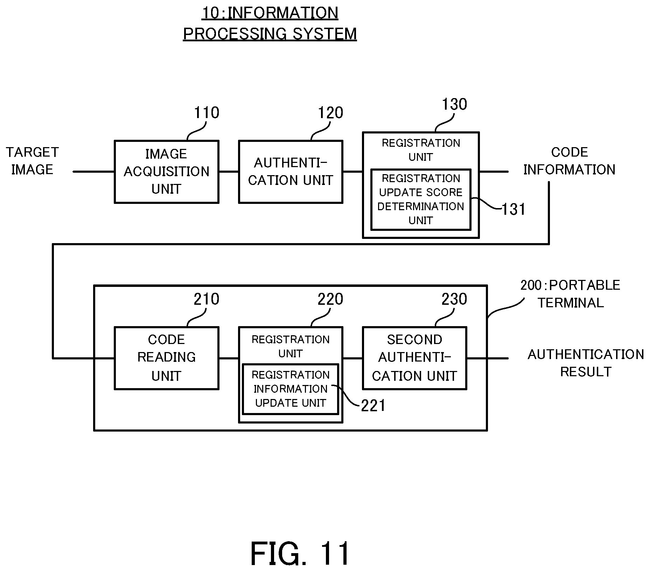

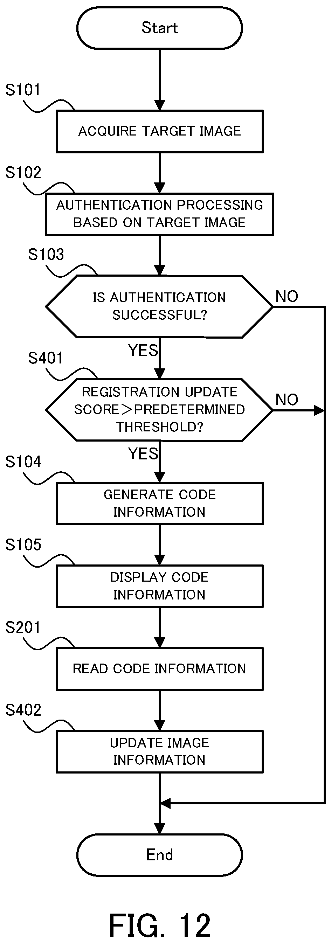

A fourth information processing system 10 will be described with reference to FIG. 11 and FIG. 12. The fourth information processing system 10 partially differs from the first to third information processing systems 10 described above only in its configuration and operation, and may be the same as the first to third information processing systems 10 in the other parts. Therefore, a part differing from each of the example embodiment described above will be described in detail below, and a description of the other overlapping parts will be omitted as appropriate.

### (Functional Configuration)

First, with reference to FIG. 11, a functional configuration of the fourth information processing system 10 will be described. FIG. 11 is a block diagram illustrating the functional configuration of the fourth information processing system. In FIG. 11, the same components as those illustrated in FIG. 8 carry the same reference numerals.

As illustrated in FIG. 11, the fourth information processing system 10 includes, as components for realizing its functions, the image acquisition unit 110, the authentication unit 120, the display unit 130, and the portable terminal 200. Especially, the display unit 130 in the third information processing system 10 includes a registration update score determination unit 131. Furthermore, the registration unit 220 in the third information processing system includes a registration information update unit 221.

The registration update score determination unit 131 is configured to calculate a registration update score. The "registration update score" here is a score indicating a degree of registration suitability of the target image. More specifically, the registration update score is a score indicating how suitable the target image is as the registration image. For example, the registration update score may be a score that is calculated as a higher value in a case where an identity score (i.e., a score indicating a degree of match with a genuine user) in the authentication processing is high and a non-identity score (i.e., a score indicating a degree of match with another person) is low. In this case, the registration update score determination unit 131 may calculate the registration update score from the identity score and the non-identity score calculated in the authentication unit 120. Alternatively, the registration update score may be a score that is calculated as a higher value as the image has higher quality. In this case, the registration update score determination unit 131 may calculate the registration update score, using an engine that determines the image quality, or the like.

The registration update score determination unit 131 determines whether or not to update the registration image, by determining whether or not the registration update score calculated for the target image is higher than a predetermined threshold. Specifically, the registration update score determination unit 131 determines that the registration image is to be updated in a case where the registration update score of the target image is higher than the predetermined threshold, and determines that the registration image is not to be updated in a case where the registration update score of the target image is lower than the predetermined threshold. The predetermined threshold is a threshold for determining whether or not the registration update score is higher than a preset standard. The predetermined threshold may be a value set according to the already registered registration image. For example, the predetermined threshold may be the same value as the registration update score of the already registered registration image. In this instance, in a case where the registration update score of the target image is higher than that of the already registered registration image (i.e., in a case where the target image is more suitable as the registration image than the already registered registration image is), it is determined that the registration image is to be updated. In a case where the registration update score of the target image is higher than the predetermined threshold, the display unit 130 displays the code information indicating the information about the target image.

The registration information update unit 221 is configured to update the registration image already registered by the registration unit 220. Specifically, the registration information update unit 221 updates the already registered registration image with the information about the target image for which the registration update score is determined to be higher than the predetermined threshold. In this case, the previously registered registration image is deleted. However, it is also possible to retain the previously registered registration image without deleting it.

### (Update Operation)

Next, with reference to FIG. 12, a flow of an update operation in the fourth information processing system 10 (i.e., an operation when the registration image is updated by the registration information update unit 221) will be described. FIG. 12 is a flowchart illustrating the flow of the update operation in the fourth information processing system. In FIG. 12, the same steps as those illustrated in FIG. 6 carry the same reference numerals.

As illustrated in FIG. 11, when the update operation by the fourth information processing system 10 is started, the image acquisition unit 110 first acquires the target image (Step S101). The image acquisition unit 110 outputs the acquired target image to the authentication unit 120.

Subsequently, the authentication unit 120 performs the authentication processing on the target, based on the image acquired by the image acquisition unit 110 (Step S102). In a case where the authentication processing performed on the target is not successful (Step S103: NO), the subsequent processing may be omitted.

On the other hand, in a case where the authentication processing performed on the target is successful (Step S103: YES), the registration update score determination unit 131 calculates the registration update score of the target image and determines whether or not the calculated registration update score is higher than the predetermined threshold (Step S401). In a case where the registration update score is not higher than the predetermined threshold (Step S401: NO), the subsequent processing may be omitted.

In a case where the registration update score is higher than the predetermined threshold (Step S401: YES), the display unit 130 generates the code information indicating the information about the target image (Step S104). Then, the display unit 130 displays the code information in the range where the target can confirm it (Step S105).

Then, the code reading unit 210 in the portable terminal 200 reads the code information displayed by the display unit 130, and acquires the information about the target image (Step S201). Then, the registration unit 220 updates the already registered registration image with the newly acquired information about the target image (Step S402).

### (Technical Effect)

Next, a technical effect obtained by the fourth information processing system 10 will be described.

As described in FIG. 11 and FIG. 12, in the fourth information processing system 10, the already registered registration image is updated in a case where the registration update score is higher than the predetermined threshold. This allows the registration image registered in the portable terminal 200 to be updated to a more appropriate image. Consequently, it is possible to further enhance the accuracy of the authentication processing performed by the second authentication unit 230.

### <Fifth Example Embodiment>

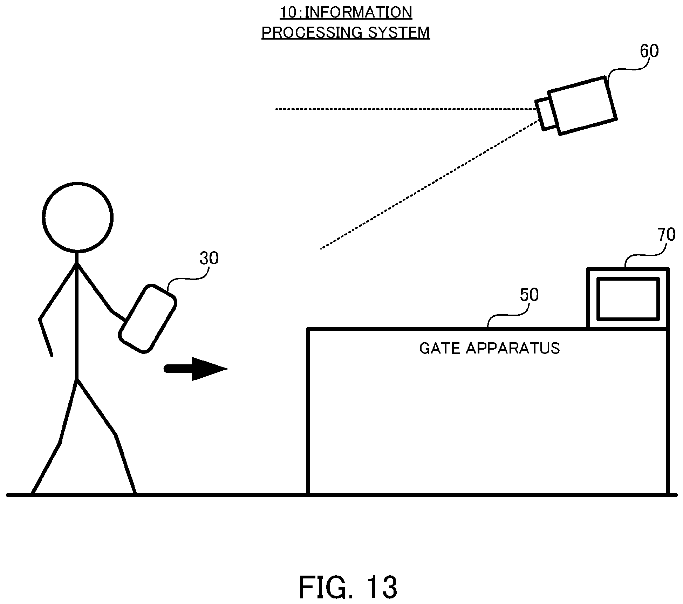

A fifth information processing system 10 will be described with reference to FIG. 13 to FIG. 16. The fifth information processing system 10 partially differs from the first to fourth information processing systems 10 described above only in its configuration and operation, and may be the same as the first to fourth information processing systems 10 in the other parts. Therefore, a part differing from each of the example embodiment described above will be described in detail below, and a description of the other overlapping parts will be omitted as appropriate.

### (Gate Apparatus)

First, with reference to FIG. 13, a gate apparatus to which the fifth information processing system 10 is applied will be described. FIG. 12 is a side view illustrating a configuration of the gate apparatus in the fifth information processing system.

As illustrated in FIG. 13, the fifth information processing system 10 is applied to a gate apparatus 50 that determines whether or not to permit the target to pass through. The gate apparatus 50 is configured to permit the target having succeeded in the authentication processing to pass through and to prohibit the target having failed in the authentication processing from passing through. For example, the gate apparatus 50 performs processing of opening a gate in a case where the authentication processing is successful. On the other hand, the gate apparatus 50 executes performs processing of closing the gate in a case where the authentication processing is failed.

When determining permit the target to pass through as described above, the gate apparatus 50 also performs processing for displaying the code information indicating the information about the target image. Specifically, the gate apparatus 50 captures an image of the approaching target using a camera 60 to acquire the target image. Then, in response to a success in the authentication processing using the target image, it permits the target to pass through the gate and displays on a display 70 the code information indicating the information about the target image. The target holds their smartphone over the display 70 before or while passing through gate apparatus 50. This causes the information about the target image to be registered on the target's smartphone.

The display 70 may be configured to display the code information in a manner that it is not visible from outside an area where the target is permitted to pass through (e.g., outside the gate apparatus 50). That is, it may be configured in a manner that prevents a person other than the target from visually recognizing the target's code information. To achieve this, the display 70 may be intentionally designed with a narrow viewing angle. The display 70 may be positioned at such an angle and position that the target passing through the gate apparatus 50 is in the viewing angle.

Furthermore, the display may be configured to display the code information only when specific conditions are met. The following describes a more specific operation when the code information is displayed.

### (First Display Operation)

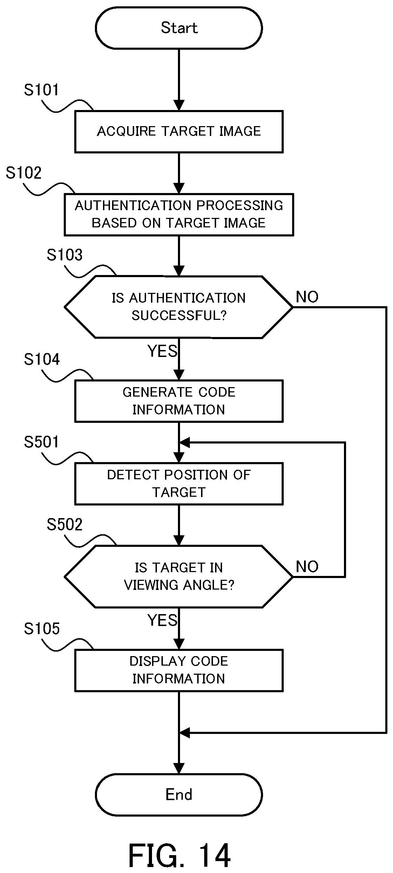

With reference to FIG. 14, a flow of a first display operation in the fifth information processing system 10 will be described. FIG. 14 is a flowchart illustrating the flow of operation of the fifth information processing system. In FIG. 14, the same steps as those illustrated in FIG. 3 carry the same reference numerals.

As illustrated in FIG. 14, when the first display operation by the fifth information processing system 10 is started, the image acquisition unit 110 first acquires the target image (Step S101). The image acquisition unit 110 outputs the acquired target image to the authentication unit 120.

Subsequently, the authentication unit 120 performs the authentication processing on the target, based on the image acquired by the image acquisition unit 110 (Step S102). In a case where the authentication processing performed on the target is not successful (Step S103: NO), the subsequent processing may be omitted.

On the other hand, in a case where the authentication processing performed on the target is successful (Step S103: YES), the display unit 130 generates the code information indicating the information about the target image (Step S104). Then, the display unit 130 detects a position of the target (Step S501). The display unit 130 may detect the position of the target, for example, using various sensors. Alternatively, the display unit 130 may detect the position of the target, using the target image.

Then, the display unit 130 determines whether or not the target is in the viewing angle of the display 70, based on the detected position of the target (Step S502). In a case where it is determined that the target is not in the viewing angle of the display 70 (Step S502: NO), the processing of detecting the position of the target (Step S501) may be repeated.

On the other hand, in a case where it is determined that the target is in the viewing angle of the display 70 (Step S502: YES), the display unit 130 displays the code information toward the target (Step S105). This allows the code information to be displayed in appropriate timing in which only the target can visually recognize it.

### (Second Display Operation)

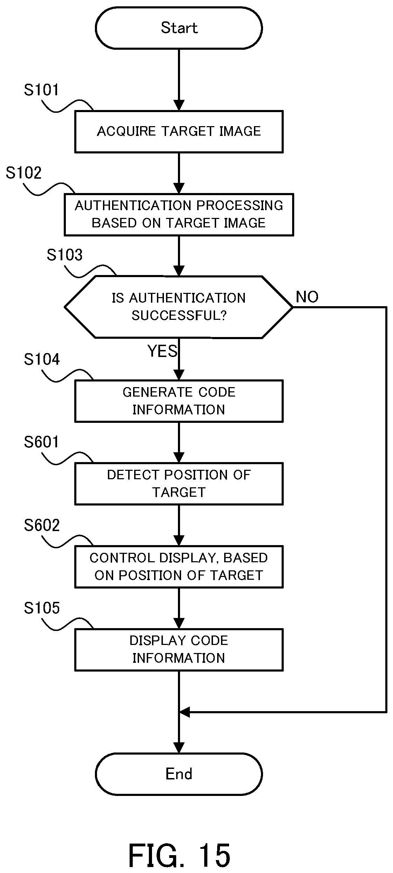

Next, with reference to FIG. 15, a second display operation of the fifth information processing system 10 will be described. FIG. 15 is a flowchart illustrating a flow of the second display operation in the fifth information processing system. In FIG. 15, the same steps as those illustrated in FIG. 3 carry the same reference numerals.

As illustrated in FIG. 15, when the second display operation by the fifth information processing system 10 is started, the image acquisition unit 110 first acquires the target image (Step S101). The image acquisition unit 110 outputs the acquired target image to the authentication unit 120.

Subsequently, the authentication unit 120 performs the authentication processing on the target, based on the image acquired by the image acquisition unit 110 (Step S102). In a case where the authentication processing performed on the target is not successful (Step S103: NO), the subsequent processing may be omitted.

On the other hand, in a case where the authentication processing performed on the target is successful (Step S103: YES), the display unit 130 generates the code information indicating the information about the target image (Step S104). Then, the display unit 130 detects the position of the target (Step S601).

Subsequently, the display unit 130 controls the orientation of the display 70, based on the detected position of the target (Step S602). For example, the display unit 130 controls the movement of the display 70 itself, using various motors, actuators, or the like.

After that, the display unit 130 displays the code information toward the target (Step S105). This allows the code information to be displayed in a direction in which the target is located, such that a person other than the target cannot visually recognize the code information.

### (Modified Example of Gate Apparatus)

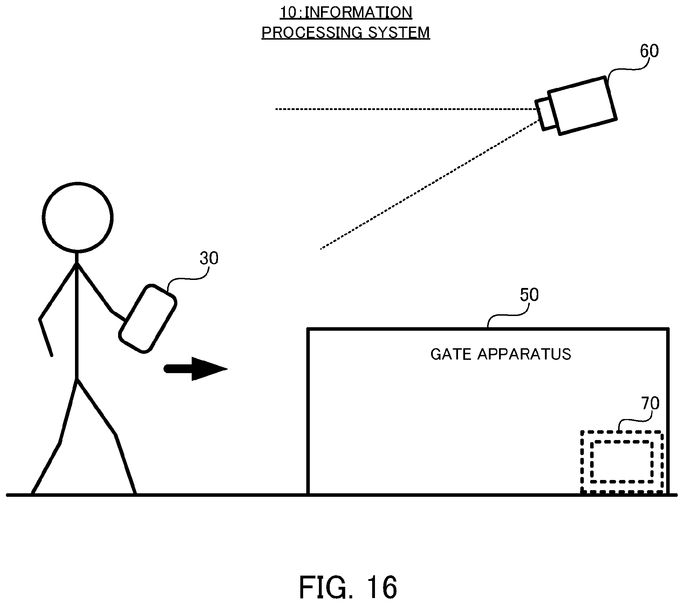

Next, with reference to FIG. 16, a modified example of the gate apparatus to which the fifth information processing system 10 is applied will be described. FIG. 16 is a side view illustrating the modified example of the gate apparatus in the fifth information processing system.

As illustrated in FIG. 16, the gate apparatus 50 according to the modified example has the display 70 positioned near a floor surface inside the gate apparatus 50 (i.e., on a side where the target passes through). This makes it difficult to see the display 70 from outside the gate apparatus 50. Consequently, it is possible to display the code information in a manner that prevents a person other than the target from visually recognizing it.

### (Technical Effect)

Next, a technical effect obtained by the fifth information processing system 10 will be described.

As described in FIG. 13 to 16, the fifth information processing system 10 displays the code information such that only the target can visually recognize it. This prevents a person other than the target from peeking at the code information. That is, it prevents a person other than the target from improperly/fraudulently acquiring the information about the target image.

A processing method that is executed on a computer by recording, on a recording medium, a program for allowing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal. The program may be provided to a user in a form of SaaS (Software as a Service), for example.

### <Supplementary Notes>

The example embodiments described above may be further described as, but not limited to, the following Supplementary Notes below.

### (Supplementary Note 1)

An information processing system according to Supplementary Note 1 is an information processing system including: an acquisition unit that acquires a target image including a target; an authentication unit that performs authentication processing on the target, based on the target image; and a display unit that displays code information indicating information about the target image, in a range where the target can confirm the code information, in response to a success in the authentication processing.

### (Supplementary Note 2)

An information processing system according to Supplementary Note 2 is the information processing apparatus according to Supplementary Note 1, further including an information processing apparatus including: a reading unit that reads the code information displayed by the display unit; a registration unit that registers the information about the target image indicated by the code information; and a second authentication unit that performs authentication processing on the target, based on the registered information about the target image and the target image that is newly acquired.

### (Supplementary Note 3)

An information processing system according to Supplementary Note 3 is the information processing system according to Supplementary Note 2, wherein the registration unit registers identification information on the target, in association with the information about the target image, and the second authentication unit performs predetermined processing using the identification information in response to a success in the authentication processing performed on the target.

### (Supplementary Note 4)

An information processing system according to Supplementary Note 4 is the information processing system according to Supplementary Note 2 or 3, wherein the display unit displays the code information in a case where a registration update score indicating a degree of registration suitability of the target image is higher than a predetermined threshold, and the registration unit updates the information about the target image that is already registered, to the information about the target image that is obtained in a case where the registration update score is higher than the predetermined threshold.

### (Supplementary Note 5)

An information processing system according to Supplementary Note 5 is the information processing system according to any one of Supplementary Notes 1 to 4, wherein the display unit displays the code information in a manner that it is not visible from outside an area where the target is permitted to pass through.

### (Supplementary Note 6)

An information processing system according to Supplementary Note 6 is the information processing system according to Supplementary Note 5, wherein the display unit includes a display that is visible in a predetermined viewing angle, and displays the code information in a case where the target is in the predetermined viewing angle.

### (Supplementary Note 7)

An information processing system according to Supplementary Note 7 is the information processing system according to Supplementary Note 5 or 6, wherein the display unit includes a display that is visible in a predetermined viewing angle, and controls orientation of the display such that the target is positioned in the predetermined viewing angle.

### (Supplementary Note 8)

An information processing system according to Supplementary Note 8 is the information processing system according to any one of Supplementary Notes 5 to 7, wherein the display unit displays the code information in a lower part of a wall that defines an area where the target is permitted to pass through.

### (Supplementary Note 9)

An information processing method according to Supplementary Note 9 is an information processing method that is executed by at least one computer, the information processing method including: acquiring a target image including a target; performing authentication processing on the target, based on the target image; and displaying code information indicating information about the target image, in a range where the target can confirm the code information, in response to a success in the authentication processing.

### (Supplementary Note 10)

A recording medium according to Supplementary Note 10 is a recording medium on which a computer program that allows at least one computer to execute an information processing method is recorded, the information processing method including: acquiring a target image including a target; performing authentication processing on the target, based on the target image; and displaying code information indicating information about the target image, in a range where the target can confirm the code information, in response to a success in the authentication processing.

### (Supplementary Note 11)

A computer program according to Supplementary Note 11 is a computer program that allows at least one computer to execute an information processing method, the information processing method including: acquiring a target image including a target; performing authentication processing on the target, based on the target image; and displaying code information indicating information about the target image, in a range where the target can confirm the code information, in response to a success in the authentication processing.

### (Supplementary Note 12)

An information processing apparatus according to Supplementary Note 12 is an information processing apparatus including: an acquisition unit that acquires a target image including a target; an authentication unit that performs authentication processing on the target, based on the target image; and a display unit that displays code information indicating information about the target image, in a range where the target can confirm the code information, in response to a success in the authentication processing.

### (Supplementary Note 13)

An information processing apparatus according to Supplementary Note 13 is an information processing apparatus including: a reading unit that reads code information indicating information about a target image including a target; a registration unit that registers the information about the target image indicated by the code information; and a second authentication unit that performs authentication processing on the target, based on the registered information about the target image and the target image that is newly acquired.

The present disclosure is allowed to be changed, if desired, without departing from the essence or spirit of this disclosure which can be read from the claims and the entire specification. An information processing system, an information processing method, and a recording medium with such changes are also intended to be within the technical scope of the present disclosure.

### Description of Reference Codes

10 Information processing system
11 Processor
30 Smartphone
31 Smartphone camera
32 Smartphone display
33 Authentication application
50 Gate apparatus
60 Camera
70 Display
110 Image acquisition unit
120 Authentication unit
130 Display unit
131 Registration update score determination unit
200 Portable terminal
210 Code reading unit
220 Registration unit
221 Registration information update unit
230 Second authentication unit
240 ID information acquisition unit

## Claims

1. An information processing system comprising:
an acquisition unit that acquires a target image including a target;
an authentication unit that performs authentication processing on the target, based on the target image; and
a display unit that displays code information indicating information about the target image, in a range where the target can confirm the code information, in response to a success in the authentication processing.

2. The information processing apparatus according to Claim 1, further comprising an information processing apparatus including:
a reading unit that reads the code information displayed by the display unit;
a registration unit that registers the information about the target image indicated by the code information; and
a second authentication unit that performs authentication processing on the target, based on the registered information about the target image and the target image that is newly acquired.

3. The information processing system according to Claim 2, wherein
the registration unit registers identification information on the target, in association with the information about the target image, and
the second authentication unit performs predetermined processing using the identification information in response to a success in the authentication processing performed on the target.

4. The information processing system according to Claim 2, wherein
the display unit displays the code information in a case where a registration update score indicating a degree of registration suitability of the target image is higher than a predetermined threshold, and
the registration unit updates the information about the target image that is already registered, to the information about the target image that is obtained in a case where the registration update score is higher than the predetermined threshold.

5. The information processing system according to any one of Claims 1 to 4, wherein the display unit displays the code information in a manner that it is not visible from outside an area where the target is permitted to pass through.

6. The information processing system according to Claim 5, wherein the display unit includes a display that is visible in a predetermined viewing angle, and displays the code information in a case where the target is in the predetermined viewing angle.

7. The information processing system according to Claim 5, wherein the display unit includes a display that is visible in a predetermined viewing angle, and controls orientation of the display such that the target is positioned in the predetermined viewing angle.

8. The information processing system according to Claim 5, wherein the display unit displays the code information in a lower part of a wall that defines an area where the target is permitted to pass through.

9. An information processing method that is executed by at least one computer, the information processing method comprising:
acquiring a target image including a target;
performing authentication processing on the target, based on the target image; and
displaying code information indicating information about the target image, in a range where the target can confirm the code information, in response to a success in the authentication processing.

10. A recording medium on which a computer program that allows at least one computer to execute an information processing method is recorded, the information processing method including:
acquiring a target image including a target;
performing authentication processing on the target, based on the target image; and
displaying code information indicating information about the target image, in a range where the target can confirm the code information, in response to a success in the authentication processing.
